# EUROPÄISCHE PATENTSCHRIFT

(11) **EP 1 721 946 B1**
(45) Veröffentlichungstag und Bekanntmachung des Hinweises auf die Patenterteilung: **31.07.2019**
(21) Anmeldenummer: 06009409.1
(22) Anmeldetag: 08.05.2006
(51) Int. Cl.: C09D 11/16

(54) **Tinte mit verlängerter "Cap-Off Time"**
Ink with prolonged "cap-off time"
encre présentant un temps "cap-off" prolongé

(30) Priorität: 10.05.2005 DE 102005022425
(43) Veröffentlichungstag der Anmeldung: 15.11.2006
(73) Patentinhaber: STAEDTLER Mars GmbH & Co. KG, 90427 Nürnberg (DE)
(72) Erfinder: Bührke, Kirsten, 91413 Neustadt a.d. Aisch (DE)

(56) Entgegenhaltungen:
- EP-A- 1 314 766
- US-A- 2 427 921
- US-A- 5 256 192
- US-A- 5 308 390
- US-A- 5 667 571
- US-A- 5 759 246
- US-B1- 6 562 116
- PATENT ABSTRACTS OF JAPAN Bd. 2003, Nr. 12, 5. Dezember 2003 (2003-12-05) & JP 2003 321638 A (MITSUBISHI PENCIL CO LTD), 14. November 2003 (2003-11-14)
- PATENT ABSTRACTS OF JAPAN Bd. 1996, Nr. 06, 28. Juni 1996 (1996-06-28) & JP 08 048927 A (MITSUBISHI PENCIL CO LTD), 20. Februar 1996 (1996-02-20)
- PATENT ABSTRACTS OF JAPAN Bd. 1998, Nr. 12, 31. Oktober 1998 (1998-10-31) & JP 10 183048 A (MITSUBISHI PENCIL CO LTD), 7. Juli 1998 (1998-07-07)
- PATENT ABSTRACTS OF JAPAN Bd. 010, Nr. 067 (C-333), 15. März 1986 (1986-03-15) & JP 60 203681 A (MITSUBISHI ENPITSU KK), 15. Oktober 1985 (1985-10-15)
- PATENT ABSTRACTS OF JAPAN Bd. 010, Nr. 017 (C-324), 23. Januar 1986 (1986-01-23) & JP 60 170675 A (EPUSON KK), 4. September 1985 (1985-09-04)

## Beschreibung

Die Erfindung betrifft nicht wässrige Tinten mit verlängerter "Cap-Off Time", wobei es sich insbesondere um eine Tinte Markieren handelt.

"Verlängerte Cap-Off Time" heißt in vorliegendem Zusammenhang, dass die Tinte im Schreib- oder Auftragsgerät auch bei längerer Lagerung mit unverschlossener Schreibspitze bzw. mit entfernter Verschlusskappe nicht eintrocknet.

Die vorgeschlagene Tinte soll es ermöglichen, dass das Schreib- oder sonstiges Auftragsgerät über längere Zeit, vorzugsweise über mehrere Stunden oder Tage, offen liegen bleiben kann.

Derartige Tinten sind prinzipiell bekannt.

In der DE 196 26 824C2 werden Marker-Tinten mit Cap-Off Additiv eingesetzt,
wobei das Cap-Off Additiv in Form eines in organischen Lösungsmitteln unlösliches Paraffinwachs und/oder Polyolefinwachs vorliegt.

Eine gute Cap-Off Zeit der Marker wird auf diese Weise erreicht.

Nachteilig ist jedoch, dass beim Einsatz in Haltern mitfeiner Linienbreite die Wirkung bezüglich Cap-Off nicht ausreichend ist.

Um nun eine akzeptable Cap-Off Zeit in Haltern mit feinen Linienbreiten zu erreichen, kann der Paraffingehalt erhöht werden, was jedoch auf Kosten des Abstrichs erfolgt, der stark trüb wird. Um die Paraffine/Polyolefine auch in feinen Linienbreiten wirkungsvoll einsetzen zu können, ohne deren Gehalt zu erhöhen, muss ein sehr aufwendiges Tintenherstellungsverfahren durchgeführt werden.

Weiter sind Markertinten bekannt, welche als Cap-Off Additive ein modifiziertes Triglycerid aufweisen. Nachteil beim Einsatz derartiger Cap-Off Additive ist, dass die Cap-Off Wirkung deutlich unter der von Tinten mit Paraffin als Cap-Off Additiv liegt.

Gerade bei Tinten mit hohem Festkörpergehalt, wie beispielsweise bei lichtechten und farbbrillanten Overheadtinten, wurden durch diese Additive keine ausreichenden Cap-Off Zeiten erreicht.

Als weitere Cap-Off Additive sind Monoester des 2,2,4-Trimethyl-1,3-pentandiol diisobutyrat (TXIB) bekannt. Dieses Additiv, welches zu der Gruppe der Weichmacher zählt, weist einen relativ hohen Siedepunkt auf, wodurch ein gewisser Schutz vor Eintrocknung erreicht werden kann.

Hierbei ist es jedoch als nachteilig anzusehen, dass das Additiv einen relativ hohen Siedepunkt besitzt, welcher laut TXIB und Literatur bei 244°C liegt; Tinten mit einen derartigem Additiv, welche eine gute Cap-Off Zeit aufweisen, besitzen auch einen sehr hohen Gehalt an Weichmacher. Die Abstriche dieser Tinten trocknen nur sehr langsam durch und sind bezüglich der Haftfestigkeit auffallend schlecht.

Insgesamt ist es als nachteilig anzusehen, dass hier eine Cap-Off Zeit zu Lasten der Haftfestigkeit erreicht wird.

Weiter ist aus der Druckschrift JP-P/AS 1-35028 B2 eine Markierungsflüssigkeit bekannt, welcher ein bei Raumtemperatur festes Paraffinwachs zugegeben wird, welches sich in dem organischen Lösungsmittel vollständig auflöst.

Als nachteilig ist es anzusehen, dass die eingesetzten Lösungsmittel auf Grund ihrer Physiologie und ihres unpolaren Charakters in Tinten keine Verwendung mehr finden. Beispiele hierfür sind Chloroform, Diethylether und Benzin.

In der JP-P/AS 6-47 660 wird demgegenüber eine Tinte mit einer erhöhten "Cap-Off Time" beschrieben, die über einen längeren Zeitraum ohne Schoner gelagert werden kann.

Diese Tinte setzt sich aus einem Farbstoff, einem organischen Lösungsmittel, Harz, Dekaglycerin und a-Olefin (alpha-Olefine) zusammen.

Olefin ist die Gruppenbezeichnung für acyclische und cyclische aliphatische Kohlenwasserstoffe mit einer oder mehreren reaktiven Doppelbindungen im Molekül.

Bei enthaltenen a-Olefinen liegt die Doppelbindung zwischen dem ersten und zweiten Kohlenstoffatom und ist auf Grund ihres ungesättigten Charakters sehr reaktionsfähig.

Nachteilig bei dieser Tinte ist das Vorhandensein von a-Olefinen, da es dazu führen kann, dass die Tinte aufgrund von Reaktionen des a-Olefins mit anderen Tintenbestandteilen nicht lagerstabil ist.

Aufgabe der Erfindung ist es daher, eine nicht wässrige Markierungsflüssigkeit auf der Basis organischer Lösungsmittel zu schaffen, die eine hohe "Cap-Off Time" aufweist, das heißt, die es ermöglicht, dass ein Schreib- oder Markiergerät auch über längere Zeit unverschlossen liegen bleiben kann, ohne dass hierbei die Tinte in der Auftragsspitze so fest eintrocknet, dass das Gerät unbrauchbar wird.

Zudem soll insbesondere bei permanenten Tinten, d.h. bei wasserfesten Tinten auch eine gute Transparenz, Leuchtkraft und Haftfestigkeit der Abstriche gegeben sein, auch nach dem Trocknen des Auftrags und besonders bei Anwendung auf nichtsaugenden Oberflächen und für Durchlicht-Auftragungen oder - Markierungen, z.B. auf Glasflächen oder auf Folien zur Tageslicht-Projektion. Weiter ist es Aufgabe, dass durch den Zusatz von sogenannten Cap-Off Additiven der Tintenfluss nicht negativ beeinflusst wird.

Ebenso ist es Aufgabe der Erfindung, dass die Tinte kostengünstig hergestellt werden kann, indem das Cap-Off Additiv im Lösungsmittel löslich ist.

Diese Aufgabe wird mit den kennzeichnenden Merkmalen des Anspruchs 1 gelöst.

Bevorzugte Ausführungsformen und vorteilhafte Weiterbildungen der Erfindung sind in den weiteren Ansprüchen umfasst.

**Gelöst wird die Aufgabe,** indem bei nicht wässrigen Tinten, die organische Lösungsmittel, Bindemittel, Trocknungsverzögerer, Farbmittel und ggf. weitere Zusätze aufweisen, Cap-Off Additive als Trocknungsverzögerer eingesetzt werden, die nach der allgemeinen Formel
CₓH_{y-n} COOH aufgebaut sind, wobei x ≥3, y = 2x + 1 und n = 0 oder 2 ist.

Diese Cap-Off Additive sind feste Fettsäuren bzw. Fettsäuregemische, die in den vorhandenen Lösungsmitteln löslich sind.

Die Löslichkeit bringt den Vorteil, dass bei der Herstellung der erfindungsgemäßen Tinte das Additiv nicht vor und während jedem Gebrauch/Prozessschritt aufgerührt werden muss.

Die Fettsäuren bzw. Fettsäuregemische lösen sich in vielen für Tinten geeigneten Lösungsmitteln bereits bei Raumtemperatur. Beispiele für Lösungsmittel sind n-Propanol, i-Propanol, n-Butanol, 1-Methoxypropanol-2, MEK und/oder Ethanol.

Allgemein kann festgehalten werden, dass
- die Fettsäuren in der Regel als allgemein erhältlicher Rohstoff einsetzbar sind,
- diese Fettsäuren langkettige, gesättigte oder ungesättigte aliphatische Monocarbonsäuren sind,
- niedrige Fettsäuren mit bis zu drei C-Atomen als Flüssigkeiten vorliegen,
- Fettsäuren mittlerer Kettenlänge flüssig oder fest vor liegen,
- höhere Fettsäuren fest und geruchlos sind,
- ungesättige Fettsäuren niedrigere Schmelzpunkte als die entsprechenden gesättigten Fettsäuren haben,
- trans-Fettsäuren höhere Schmelzpunkte als die mit cis-konfigurierten Doppelbindungen aufweisen.
- gesättigte Fettsäuren gegenüber Sauerstoff relativ stabil sind und
- ungesättigte Fettsäuren und vor allem mehrfach ungesättigte Fettsäuren leicht Autooxidation erleiden.

In nachfolgender Tabelle sind Beispiele natürlich vorkommender Fettsäuren aufgelistet

| Kürzel | Schmelzpunkt (°C) | Nomenklatur | Trivialname |
|---|---|---|---|
| 4:0 | -6 | Butansäure | Buttersäure |
| 6:0 | -3,9 | Hexansäure | Capronsäure |
| 8:0 | 17 | Octansäure | Caprylsäure |
| 10:0 | 31 | Decansäure | Caprinsäure |
| 12:0 | 44 | Dodecansäure | Laurinsäure |
| 14:0 | 58,5 | Tertadecansäure | Myristinsäure |
| 16:0 | 63 | Hexadecansäure | Palmitinsäure |
| 18:0 | 69-71 | Octadecansäure | Stearinsäure |
| 20:0 | 75 | Eicosansäure | Arachinsäure |
| 22:0 | 79-80 | Docosansäure | Behensäure |
| 18:1 | 16 | (Z)-9-Octadecensäure | Ölsäure |

| | | | |
|---|---|---|---|
| Quelle: www.organik.uni-erlangen.de/vostrowsky/natstoff/1 nafettsr.pdf | | | |

Beispielhaft wurden gesättigte Verbindungen des Stearin-(C18) und der Palmitinsäure (C16) bzw. deren Mischungen, auch Stearin genannt, eingesetzt.

Die festen, gesättigten Fettsäuren, wie Stearin- und/oder Palmitinsäure zeigen eine sehr gute Cap-Off Wirkung.

Es hat sich gezeigt, dass um eine gute Cap-Off Zeit zu erreichen feste, im eingesetzten Lösungsmittel lösliche Fettsäuren geeignet sind.

Die Wirkungsweise der Fettsäuren beruht darauf, dass sie an der Phasengrenze Tinte / Luft eine Schutzschicht bilden und so das Verdunsten des Lösungsmittels einschränken können.

Dabei ist die Cap-Off Wirkung mit höherem Gehalt an Fettsäure in einer Tinte besser, die Wischfestigkeit bzw. Trockenzeit der Abstriche wird allerdings auf nichtsaugendem Untergrund parallel schlechter. Ebenfalls bilden die Tinten mit zu hohem Fettsäuregehalt nach dem Trocknen eine trüb wirkende Oberfläche. Schlussfolgernd muss die Konzentration der Fettsäure in der Tinte im Verhältnis zu den restlichen Komponenten wie Farbstoffe und Bindemittel zwecks optimaler Wirkung eingestellt werden.

Nachfolgend soll die Erfindung anhand einiger Ausführungsbeispiele erläutert werden.

**Rahmenbeispiel:**

| | |
|---|---|
| 50 - 95 Gew.% | organisches Lösungsmittel (LM) |
| 0 - 20 Gew.% | Bindemittel (BM) |
| 0,05 -10 Gew.% | Fettäure und/oder Fettsäuregemisch (COA) |
| 1 - 30 Gew.% | Farbmittel (FM) |
| 0 - 10 Gew.-% | Tensid (T) |
| 0 - 15 Gew.-% | Additive (A1, A2, ....) |

**Rezepturbeispiel 1:**

| | |
|---|---|
| n-Propanol (LM) | 69 Gew. % |
| n-Butanol (LM) | 8 Gew. % |
| Stearinsäure (COA) | 4 Gew. % |
| Bindemittel (BM) | 4 Gew. % |
| Solvent Black 29 (FM) | 15 Gew. % |

**Rezepturbeispiel 2:**

| | |
|---|---|
| n-Propanol (LM) | 68 Gew. % |
| n-Butanol (LM) | 7 Gew. % |
| Stearinsäure (COA) | 5 Gew. % |
| Bindemittel (BM) | 3 Gew. % |
| Solvent Black 29 (FM) | 15 Gew. % |
| Flourtensid (T) | 2 Gew. % |

**Rezepturbeispiel 3:**

| | |
|---|---|
| n-Propanol (LM) | 61 Gew. % |
| n-Butanol (LM) | 15 Gew. % |
| Mischung Stearinsäure/Palmitinsäure (COA) | 6 Gew. % |
| Bindemittel (BM) | 3 Gew. % |
| Solvent Black 29 (FM) | 15 Gew. % |

**Rezepturbeispiel 4:**

| | |
|---|---|
| n-Propanol (LM) | 72,4 Gew. % |
| 1-Methoxypropanol-2 (LM) | 3,8 Gew. % |
| Stearinsäure (COA) | 3,8 Gew. % |
| Bindemittel (BM) | 3 Gew. % |
| Solvent Black 29 (FM) | 15,2 Gew. % |
| Fluortensid (T) | 1,8 Gew. % |

Es hat sich überraschender Weise gezeigt, dass bei Tinten, die Wachse als Cap-Off Additiv enthalten, wie beispielsweise Lösungsmitteltinten mit Paraffinwachsen bzw. Paraffinwachsdispersionen, nun Fettsäuren als Kombinationpartner eingesetzt werden können. Paraffinwachse unterstützen die Cap-Off Zeit zum Teil zusätzlich. Ein Beispiel hierfür ist die Rezeptur 5.

Eigenschaften wie Mattierungseffekt, Trocknungsverhalten und/oder Haftfestigkeit bei Whiteboard Markern steuern zu können, ist die Möglichkeit der Kombination von Fettsäuren und Wachsen empfehlenswert.

Durch Einsatz beider Cap-Off Additive wird der nicht erwünschte Schmiereffektes sicher verhindert.

**Rezepturbeispiel 5:**

| | |
|---|---|
| n-Propanol (LM) | 83 Gew. % |
| Mischung Stearinsäure/Palmitinsäure (COA) | 3 Gew. % |
| Paraffindispersion (A1) | 1,5 Gew. % |
| Pigment Blue 15:3 (FM) | 3,5 Gew. % |
| Schmiermittel (A2) | 9 Gew. % |

Als Lösungsmittel werden zum Beispiel n-Propanol, i-Propanol, n-Butanol, 1-Methoxypropanol-2, MEK und/ oder Ethanol eingesetzt. In diesen Lösungsmitteln lösen sich die Fettsäuren.

Sehr gute Cap-Off Zeit der Tinten wurden bei der Verwendung von n-Propanol erreicht. Wie in den Beispielen auch gezeigt, eignet sich n-Butanol sehr gut als Co-Lösungsmittel.

Bei den eingesetzten Farbmitteln für die permanente Tinten handelt es sich um wasserunlösliche Solventfarbstoffe und wasserlösliche, basische Farbstoffe. Die wasserlöslichen Farbstoffe werden durch Zugabe eines sauren Harzes verlackt und in eine wasserunlösliche Form überführt.

**Farbstoffe für wasserlösliche Tinten** können saure Farbstoffe sein, welche sich in Wasser und zum Teil in organischen Lösungsmitteln lösen, so dass der getrocknete Abstrich wasserlöslich bleibt.

Als Farbmittel können auch Pigmente eingesetzt werden, z.B. bei Tinten für Whiteboard Marker Pigmente können in Kombination mit einem Träger, z.B. Polyvinylbutyral und/oder Ethylcellulose vorliegen. Der Träger löst sich im Lösungsmittel, wobei das Pigment dabei fein verteilt wird.

**Bindemittel** finden sich in permanenten Farbstoff-Tinten wieder. Sie dienen dazu, dass zum einen die Haftfestigkeit der getrockneten Abstriche auf nichtsaugendem Grund verbessert wird, und zum anderen die sauren Harze zum Verlacken der basischen Farbstoffe genutzt werden.

Im Bereich Pigmenttinten wird ein Bindemittel meistens schon über die Pigmentpräparation eingeführt bzw. zugeführt. Um speziell die Haftfestigkeit der Tinten zu verbessern, können darüber hinaus weitere Bindemittel zugesetzt werden. Es ist allerdings zu beachten, dass sich die Cap-Off Zeit der Tinten je nach Bindemittelart und Menge verändern kann. Auf alle Fälle muss das Bindemittel in dem organischen Lösungsmittel löslich sein. Als derartiges Bindemittel kann vorzugsweise ein Phenol-Formaldehyd-Harz und/oder ein Fumarsäure-Kolophonium-Addukt verwendet werden. Wenn keine basischen Farbstoffe verwendet werden, sind saure Harze nicht zwingend erforderlich.

In Tinten können unterschiedliche Arten von **Additiven** wie Entschäumer, Dispergierhilfsmittel, Schmiermittel, Öle und Tenside enthalten sein.

Bei der Herstellung von Cap-Off Tinten nach dem Stand der Technik konnten bis dato Tenside, vor allem die hochwirksamen Fluortenside, nicht eingesetzt werden. Beispielsweise reagierten Tinten mit Paraffinwachs sehr empfindlich auf Tenside. Es hat sich gezeigt, dass Cap-Off Tinten, die auf der Wirkung von Fettsäuren basieren, gegen Tenside deutlich signifikant unempfindlicher sind, so dass bei Bedarf auch Fluortenside eingesetzt werden können. Der Zusatz von Tensiden beeinflusst die Cap-Off Zeit nur gering.

Folgende **Vorteile** beim Einsatz von Fettsäuren sind:
- dass mit Fettsäuren als Cap-Off Additivfür Pigmenttinten auf Lösungsmittelbasis sehrgute Ergebnisse erzielt werden können,
- dass Fettsäuren, beispielsweise Stearinsäuren mit den Paraffinwachsen / Paraffindispersionen kombinierbar sind,
- dass das Cap-Off Additiv in vielen gebräuchlichen Lösungsmitteln löslich ist,
- dass Tinten mit Fettsäure als Cap-Off Additiv mit Fluortensid kombiniert werden können,
- dass es sich bei Fettsäuren um billige handelsübliche Rohstoffe handelt,
- dass, bezüglich Haftfestigkeit auf Glas/im Wasserbad, eine Verbesserung erreicht wird und
- dass die Einarbeitung der Fettsäuren in eine Tintenbasis sehr unkompliziert und ohne großen Arbeitsaufwand möglich ist, womit eine Kosteneinsparung einhergeht.

Sind Schreibgeräte bzw. Halter nach zu langer offener Lagerung an der Schreibspitze etwas angetrocknet - also nicht gänzlich aus- bzw. eingetrocknet - dann werden sie durch Lagerung mit geschlossenem Schoner wieder regeneriert.

Überraschenderweise konnte ein weiterer positiver Effekt beim Einsatz einer Kombination von Fettsäuren mit Tensiden festgestellt werden. In den Rezepturbeispielen 2 und 4 liegt eine derartige Kombination vor.

Hierzu muss festgehalten werden, dass durch den Einsatz hocheffektiver Fluortenside in Tinten eine Benetzung von easy-clean und nano-behandelten Oberflächen sowie von Teflon möglich wird.

Nachteilig war es bisher, dass die Tinten, welche mit Fluortensiden versetzt waren, einen sehr starken "drain back-Effekt" in den Haltern aufweisen.

Drain back allgemein bedeutet, dass Tinten bei Lagerung des Halters mit Schreibspitze nach oben im Tintenspeicher absacken, so dass die Schreibspitze beim Anschreiben nicht ausreichend mit Tinte versorgt ist. Hierbei ist die Stärke des drain back Effektes von den eingesetzten Farbstoffen, der Farbstoffkonzentrationen, den Lösungsmitteln und/oder Schreibspitzentyp beeinflusst. Dies hat zur Folge, dass der Halter nicht sofort anschreibt und fast wie aus- bzw. eingetrocknet wirkt. Nach kurzer Ausgleichszeit, in der Regel einige Minuten liegt wieder ein einwandfreier Tintenfluss vor. Dieser Effekt war beim Einsatz von Fluortensiden in derartigen Tinten sehr stark zu beobachten.

Bei Schreibgeräten nach dem Stand der Technik, welche Tinten beinhalten, die kein Fluortensid enthalten tritt der drain-back Effekt nicht auf. Leider benetzen diese Tinten schwierige Oberflächen, wie beispielsweise Nanooberflächen nicht. Auch wirken die Abstriche der Tinten, vor allem auf nicht gereinigten Oberflächen, oft nicht liniengenau, sie fransen aus.

Es konnte nun überraschenderweise festgestellt werden, dass bei Tinten, welche die Fluortenside enthalten, durch Zusatz von Fettsäuren der drain-back Effekt, je nach Einsatzmenge, signifikant verringert werden kann.

**Strukturformeln:**

| | |
|---|---|
| Fluortensid: | C₇F₁₅-CH₂O-(CH₂-CH₂-O)₄₋₁₄-R |
| Fettsäure (Beispiel Stearinsäure): | CH₃-(CH₂)₁₆-COOH |

Da es sich bei den Fettsäuren um ein lösliches Additiv handelt, könnte es auch für Ink Jet Tinten Verwendung finden, um auch bei derartigen Tinten eine Cap-Off Zeit zu erhöhen. Da die Tinten im Ink-Jet Bereich nicht in Tintenspeicher abgefüllt werden, die beispielsweise ein Absetzen des unlöslichen Paraffinwachses verhindern, konnte Paraffinwachs als Cap-Off Additiv nicht eingesetzt werden. Fettsäuren hingegen liegen in gelöster Form vor, setzen sich nicht ab und sind gleichmäßig in der gesamten Tinte verteilt.

Die Erfindung betrifft eine nicht wässrige Tinte mit verlängerter "Cap-Off-Time", zum Schreiben, Zeichnen, Malen oder Markieren, als Schreib- oder Markierungsflüssigkeit, die organische Lösungsmittel, Bindemittel, Trocknungsverzögerer, Farbmittel und ggf. weitere Zusätze aufweist,
wobei der Trocknungsverzögerer eine Fettsäure oderein Fettsäuregemisch ist. Die Fettsäure oder das Fettsäuregemisch ist In mindestens einem Lösungsmittel löslich.

Fettsäuren sind Palmitinsäure, und/oder Stearinsäure.

Das Bindemittel ist in dem organischen Lösungsmittel löslich. Das Farbmittel ist ein wasserlöslicher oder wasserunlöslicher Farbstoff oder ein wasserunlösliches und/oder im Lösungsmittel unlösliches Pigment.

## Patentansprüche

1. Markierungstinte für nichtsaugende Oberflächen mit verlängerter "Cap-Off-Time",
wobei die Tinte
| | |
|---|---|
| 50 - 95 Gew.% | organisches Lösungsmittel |
| 0,05 - 10 Gew.% | Trocknungsverzögerer |
| 1 - 30 Gew.% | Farbmittel |
| 0 - 20 Gew.% | Bindemittel |
| 0 - 10 Gew.-% | Tensid |
| 0 - 15 Gew.-% | Additive (A1, A2, ....) aufweist, |
wobei das Farbmittel ein wasserlöslicher oder wasserunlöslicher Farbstoff ist, wobei der Trocknungsverzögerer eine feste Fettsäure und/oder ein Gemisch aus festen Fettsäuren ist
und wobei die feste Fettsäure Palmitinsäure und/oder Stearinsäure ist.

2. Tinte nach Anspruch 1,
**dadurch gekennzeichnet,**
**dass** die Fettsäure oder das Fettsäuregemisch in mindestens einem Lösungsmittel löslich ist.

3. Tinte nach einem der vorhergehenden Ansprüche,
**dadurch gekennzeichnet,**
**dass** das Bindemittel in dem organischen Lösungsmittel löslich ist.

## Claims

1. Non-aqueous marking ink for non-absorbent surfaces with extended 'cap-off time', wherein the ink comprises
| | |
|---|---|
| 50 - 95 weight % | organic solvent |
| 0.05 - 10 weight % | drying retardant |
| 1 - 30 weight % | pigment |
| 0 - 20 weight % | binder |
| 0 - 10 weight % | surfactant |
| 0 - weight % | additives (A1, A2, ...), |
wherein the pigment is a water-soluble or water-insoluble dye,
wherein the drying retardant is a solid fatty acid and/or a mixture of solid fatty acids and
wherein the solid fatty acid is palmitic acid and/or stearic acid.

2. Ink according to claim 1, **characterised in that** the fatty acid or the fatty acid mixture is soluble in at least one solvent.

3. Ink according to one of the preceding claims, **characterised in that** the binder is soluble in the organic solvent.

## Revendications

1. Encre de marquage non aqueuse pour surfaces non absorbantes à durée sans capuchon prolongée, l'encre présentant
de 50 à 95 % en poids de solvant organique
de 0,05 à 10 % en poids de retardateur de séchage
de 1 à 30 % en poids d'agent colorant
de 0 à 20 % en poids d'agent liant
de 0 à 10 % en poids d'agent tensioactif
de 0 à 15 % en poids d'additifs (A1, A2, ....),
dans laquelle l'agent colorant est un colorant soluble dans l'eau ou insoluble dans l'eau,
dans laquelle le retardateur de séchage est un acide gras solide et/ou un mélange d'acides gras solides
et dans laquelle l'acide gras solide est l'acide palmitique et/ou l'acide stéarique.

2. Encre selon la revendication 1,
**caractérisée en ce**
**que** l'acide gras ou le mélange d'acides gras est soluble dans au moins un solvant.

3. Encre selon l'une des revendications précédentes,
**caractérisée en ce**
**que** l'agent liant est soluble dans le solvant organique.
